(19) **Europäisches Patentamt / European Patent Office / Office européen des brevets**

(11) **EP 4 393 767 A1**

(12) **EUROPEAN PATENT APPLICATION**
published in accordance with Art. 153(4) EPC

(43) Date of publication:
**03.07.2024 Bulletin 2024/27**

(21) Application number: **22914632.9**

(22) Date of filing: **26.12.2022**

(51) International Patent Classification (IPC):
**B60L 58/10** (2019.01)   **B60L 58/25** (2019.01)
**B60L 53/62** (2019.01)

(52) Cooperative Patent Classification (CPC):
**B60L 3/00; B60L 3/12; B60L 53/14; B60L 53/62; B60L 58/10; B60L 58/25;** Y02T 10/70

(86) International application number:
**PCT/CN2022/141823**

(87) International publication number:
**WO 2023/125378 (06.07.2023 Gazette 2023/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.12.2021 CN 202111649681**

(71) Applicant: **BYD Company Limited**
**Shenzhen, Guangdong 518118 (CN)**

(72) Inventors:
- **LING, Heping**
  **Shenzhen, Guangdong 518118 (CN)**
- **ZHAI, Zhen**
  **Shenzhen, Guangdong 518118 (CN)**
- **LIU, Junhua**
  **Shenzhen, Guangdong 518118 (CN)**
- **LIANG, Wei**
  **Shenzhen, Guangdong 518118 (CN)**
- **SUN, Yulin**
  **Shenzhen, Guangdong 518118 (CN)**

(74) Representative: **Dehns Germany Partnerschaft mbB**
**Theresienstraße 6-8**
**80333 München (DE)**

(54) **OVER-HEATING PROTECTION METHOD AND APPARATUS FOR CHARGING APPARATUS, AND ELECTRIC VEHICLE**

(57)    A method of over-temperature protection and apparatus for a charging apparatus, an electric vehicle, and a computer-readable storage medium are disclosed. The method of over-temperature protection includes: a charging parameter of a charging apparatus during a charging process is obtained, where the charging parameter includes a time and a temperature, and the time corresponds to the temperature; a temperature change trend of the charging apparatus is estimated based on the charging parameter; and when it is determined based on the temperature change trend that the highest estimated temperature is about to exceed a preset temperature threshold, the charging current is limited before the highest estimated temperature exceeds the preset temperature threshold. A temperature change trend of a charging apparatus is estimated based on a charging parameter, and it can be estimated in advance whether the charging apparatus is subject to over-temperature during a charging process, and the charging current can be adjusted faster and more effectively, and safety and reliability are improved.

Obtain a charging parameter of a charging apparatus during a charging process, where the charging parameter includes a time and a temperature, and the time corresponds to the temperature — S1

Estimate a temperature change trend of the charging apparatus based on the charging parameter — S2

When it is determined based on the temperature change trend that the highest estimated temperature is about to exceed a preset temperature threshold, limit the charging current before the highest estimated temperature exceeds the preset temperature threshold — S3

FIG. 1

EP 4 393 767 A1

**Description**

**CROSS-REFERENCE TO RELATED APPLICATIONS**

The present disclosure is proposed based on Chinese Patent Application No. 202111649681.0 filed on December 30, 2021, and claims priority to the Chinese Patent Application, which is incorporated herein by reference in its entirety.

**FIELD**

The present disclosure relates to the technical field of charging over-temperature protection, and more specifically, to a method of over-temperature protection for a charging apparatus, an apparatus of over-temperature protection for a charging apparatus, an electric vehicle and a computer-readable storage medium.

**BACKGROUND**

With the development of electric vehicles, the charging power of electric vehicles gradually increases, and the risk of over-temperature ablation of sockets of charged vehicles increases. Currently, a common over-temperature protection measure for sockets of charging vehicles is to arrange temperature sensors on internal terminals of the sockets of the charging vehicles and set temperature upper limits (temperature thresholds) that the terminals allow. When the temperatures of the terminals reach the upper temperature limits, the entire vehicles reduce charging currents, thereby lowering the temperatures of the sockets of the charging vehicles.

In the above solution, if the temperature threshold is set to be excessively high, the temperatures of the terminals may exceed the temperature resistance limits of the materials of the charging apparatuses. Exceeding the temperature resistance limits of the materials degrades the mechanical and electrical properties of the materials. Since the degradation is irreversible, this causes permanent damage to the vehicle apparatuses. If the temperature threshold of the charging port is set to be excessively low, it is vulnerable to have frequent current restriction, which will prolong the charging time and deteriorate the user experience.

**SUMMARY**

The present disclosure is intended to resolve one of technical problems in the related art at least to some extent. To this end, the present disclosure proposes a method of over-temperature protection for a charging apparatus. A temperature change trend of a charging apparatus is estimated based on a charging parameter, and it can be estimated in advance whether the charging apparatus is subject to over-temperature during a charging process, so that the charging current can be adjusted faster and more effectively, and safety and reliability are improved.

The present disclosure proposes an apparatus of over-temperature protection for a charging apparatus.

The present disclosure proposes an electric vehicle.

The present disclosure proposes a computer-readable storage medium.

An embodiment of a first aspect of the present disclosure proposes a method of over-temperature protection for a charging apparatus, including: a charging parameter of a charging apparatus during a charging process is obtained, where the charging parameter includes a time and a temperature, and the time corresponds to the temperature; a temperature change trend of the charging apparatus is estimated based on the charging parameter; and when it is determined based on the temperature change trend that the highest estimated temperature is about to exceed a preset temperature threshold, the charging current is limited before the highest estimated temperature exceeds the preset temperature threshold.

According to the method of over-temperature protection for a charging apparatus according to the embodiments of the present disclosure, first, a charging parameter of a charging apparatus during a charging process is obtained, a temperature change trend of the charging apparatus is estimated based on the charging parameter, and finally, when it is determined based on the temperature change trend that the highest estimated temperature is about to exceed a preset temperature threshold, the charging current is limited before the highest estimated temperature exceeds the preset temperature threshold. Therefore, in this method, a temperature change trend of a charging apparatus is estimated based on a charging parameter, and it can be estimated in advance whether the charging apparatus is subject to over-temperature during a charging process, so that the charging current can be adjusted faster and more effectively, and safety and reliability are improved.

Additionally, the method of over-temperature protection for a charging apparatus according to the embodiments of the present disclosure may further have the following additional technical features:

According to an embodiment of the present disclosure, the estimating a temperature change trend of the charging apparatus based on the charging parameter includes: charging parameters of multiple sampling points and a fitting function are determined; the charging parameter of each sampling point is substituted into the fitting function to obtain various parameters in the fitting function; the obtained various parameters are substituted into the fitting function to obtain a temperature estimation model of the charging apparatus; and the temperature change trend of the charging apparatus is estimated based on the charging parameter and the temperature estimation model.

According to an embodiment of the present disclosure, the fitting function is expressed by the following formula:

$$T = C_0 + C_1 t + C_2 t^2 + C_3 t^3 + \ldots + C_{n-1} t^{n-1}$$

where T represents a temperature of the charging apparatus, t represents a charging time, $C_0$ to $C_{n-1}$ represent the various parameters of the fitting function, and n is a number of the temperature sampling points.

According to another embodiment of the present disclosure, the fitting function is expressed by the following formula:

$$T(t) = A_0 + \sum_{j=1}^{n} B_j e^{-nt_i} + \sum_{j=1}^{n} C_j \arctan t_i$$

where T represents a temperature of the charging apparatus, t represents a charging time, $A_0$, $B_1$ to $B_n$, and $C_1$ to $C_n$ represent the various parameters of the fitting function, and n is a number of the temperature sampling points.

According to an embodiment of the present disclosure, the limiting the charging current before the highest estimated temperature exceeds the preset temperature threshold includes: the charging current is limited by gradually adjusting the charging current, so that the highest estimated temperature is within a preset temperature range.

According to an embodiment of the present disclosure, the limiting the charging current by gradually adjusting the charging current includes: an initial current during the charging process is determined; the initial current is reduced by a preset step, to obtain a first current; and when controlling the charging apparatus to charge the device with the first current, a charging parameter within a first preset time is obtained, the temperature change trend of the charging apparatus is estimated based on the charging parameter within the first preset time, the updated highest estimated temperature is obtained, and if the updated highest estimated temperature exceeds an upper limit of the preset temperature range, the first current continues to be reduced by a preset step, until the updated highest estimated temperature is less than or equal to the upper limit of the preset temperature range.

According to an embodiment of the present disclosure, the limiting the charging current by gradually adjusting the charging current further includes: when controlling the charging apparatus to charge the device with the first current, if the updated highest estimated temperature does not exceed the upper limit of the preset temperature range, a relationship between the updated highest estimated temperature and a lower limit of the preset temperature range is determined; and if the updated highest estimated temperature is less than the lower limit of the preset temperature range, a second current is determined based on the initial current and the first current, the charging apparatus is controlled to charge the device with the second current, a charging parameter within a second preset time is obtained, the temperature change trend of the charging apparatus is estimated based on the charging parameter within the second preset time, the updated highest estimated temperature is obtained, and if the updated highest estimated temperature is still less than the lower limit of the preset temperature range, a value of the second current is assigned to the first current until the updated highest estimated temperature is greater than or equal to the lower limit of the preset temperature range, where the second current is greater than the first current and less than the initial current.

According to an embodiment of the present disclosure, the limiting the charging current by gradually adjusting the charging current further includes: when controlling the charging apparatus to charge the device with the second current, if the updated highest estimated temperature is greater than the upper limit of the preset temperature range, the value of the second current is assigned to the initial current until the updated highest estimated temperature is less than or equal to the upper limit of the preset temperature range.

According to an embodiment of the present disclosure, the determining a second current according to the initial current and the first current includes: the initial current and the first current are added and the added result is halved to obtain the second current.

According to an embodiment of the present disclosure, the limiting the charging current by gradually adjusting the charging current further includes: when controlling the charging apparatus to charge the device with the second current, if the updated highest estimated temperature is within the preset temperature range, the current charging current is maintained.

According to an embodiment of the present disclosure, the limiting the charging current by gradually adjusting the charging current further includes: when controlling the charging apparatus to charge the device with the first current, if the updated highest estimated temperature is within the preset temperature range, the current charging current is maintained.

An embodiment of a second aspect of the present disclosure proposes an apparatus of over-temperature protection for a charging apparatus, including: an obtaining module, configured to obtain a charging parameter of a charging apparatus during a charging process, where the charging parameter includes a time and a temperature, and the time corresponds to the temperature; an estimation module, configured to estimate a temperature change trend of the charging apparatus based on the charging parameter; and a protection control module, configured to: when determining based on the temperature change trend that the highest estimated temperature is about to exceed a preset temperature threshold, limit the charging current before the highest estimated temperature exceeds the preset temperature threshold.

According to the apparatus of over-temperature protection for a charging apparatus according to the embodiments of the present disclosure, the obtaining module obtains a charging parameter of a charging apparatus during a charging process, the estimation module estimates a temperature change trend of the charging apparatus based on the charging parameter, and when it is determined based on the temperature change trend that the highest estimated temperature is about to exceed a preset temperature threshold, the protection control module limits the charging current before the highest estimated temperature exceeds the preset temperature threshold. Therefore, in this apparatus, a temperature change trend of a charging apparatus is estimated based on a charging parameter, and it can be estimated in advance whether the charging apparatus is subject to over-temperature during a charging process, so that the charging current can be adjusted faster and more effectively, and safety and reliability are improved.

An embodiment of a third aspect of the present disclosure provides an electric vehicle, including: a memory, a processor, and an over-temperature protection program for a charging apparatus stored in the memory and executable on the processor, when the over-temperature protection program is executed by the processor, the foregoing method of over-temperature protection for a charging apparatus being implemented.

According to the electric vehicle according to the embodiments of the present disclosure, based on the foregoing method of over-temperature protection for a charging apparatus, a temperature change trend of a charging apparatus is estimated based on a charging parameter, and it can be estimated in advance whether the charging apparatus is subject to over-temperature during a charging process, so that the charging current can be adjusted faster and more effectively, and safety and reliability are improved.

An embodiment of a fourth aspect of the present disclosure provides a computer-readable storage medium, storing an over-temperature protection program for a charging apparatus, when the over-temperature protection program for a charging apparatus is executed by a processor, the foregoing method of over-temperature protection for a charging apparatus being implemented.

According to the computer-readable storage medium of the embodiments of the present disclosure, based on the foregoing method of over-temperature protection for a charging apparatus, a temperature change trend of a charging apparatus is estimated based on a charging parameter, and it can be estimated in advance whether the charging apparatus is subject to over-temperature during a charging process, so that the charging current can be adjusted faster and more effectively, and safety and reliability are improved.

The additional aspects and advantages of the present disclosure will be provided in the following description, some of which will become apparent from the following description or may be learned from practices of the present disclosure.

## BRIEF DESCRIPTION OF THE DRAWINGS

FIG. 1 is a flowchart of a method of over-temperature protection for a charging apparatus according to an embodiment of the present disclosure;

FIG. 2 is a schematic structural diagram of a terminal of a charging apparatus and another terminal of the charging apparatus paired with the terminal according to an embodiment of the present disclosure;

FIG. 3 is a flowchart of a method of over-temperature protection for a charging apparatus according to a specific embodiment of the present disclosure;

FIG. 4 is a flowchart of gradually controlling a charging current according to a specific embodiment of the present disclosure;

FIG. 5 is a schematic block diagram of an apparatus of over-temperature protection for a charging apparatus according to an embodiment of the present disclosure; and

FIG. 6 is a schematic block diagram of an electric vehicle according to an embodiment of the present disclosure.

## DETAILED DESCRIPTION

The embodiments of the present disclosure are described below in detail. Examples of the embodiments are shown in the accompanying drawings, and same or similar reference signs in all the accompanying drawings indicate same or similar components or components having same or similar functions. The embodiments described below with reference to the accompanying drawings are exemplary, and are intended to explain the present disclosure and cannot be construed as a limitation on the present disclosure.

The method of over-temperature protection for a charging apparatus, the apparatus of over-temperature protection for a charging apparatus, the electric vehicle and the computer-readable storage medium proposed by the embodiments of the present disclosure are described below with reference to the accompanying drawings.

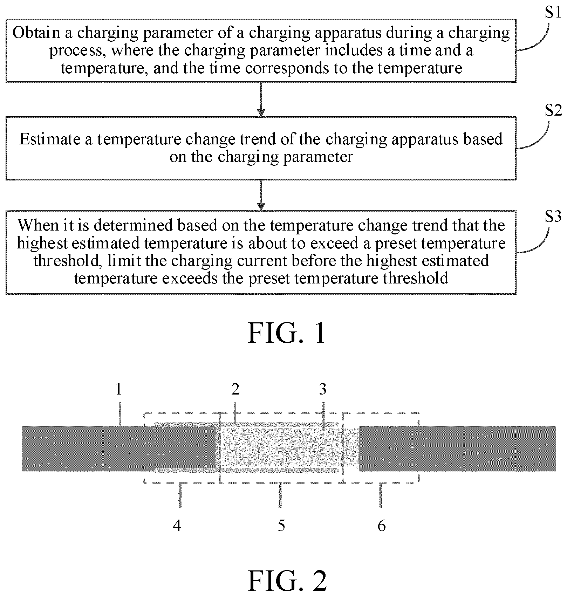

FIG. 1 is a flowchart of a method of over-temperature protection for a charging apparatus according to an embodiment of the present disclosure. The charging apparatus can be applied to devices such as electric vehicles and electric scooters that require charging operations.

As shown in FIG. 1, the method of over-temperature protection for a charging apparatus according to the embodiments of the present disclosure may include:

S1: A charging parameter of a charging apparatus during a charging process is obtained, where the charging parameter includes a time and a temperature, and the time corresponds to the temperature.

Specifically, a real-time temperature of the terminal can be collected by a temperature sensor installed at the terminal of the charging apparatus, and used as a temperature in the charging parameter of the charging apparatus. That is, after charging starts, the temperature of the terminal corresponding to a time point is collected and is recorded as a charging parameter. For example, a collection cycle can be preset. When charging starts, the charging time is recorded as 0, and the current temperature is collected. During the sampling process, a temperature T of the terminal and a corresponding sampling time t are collected sequentially at an interval of each sampling cycle, and the charging parameter is recorded as (t, T), so as to obtain multiple charging parameters during the charging process.

It should be noted that the number of charging parameters and the sampling cycle can be set according to an actual case.

S2: A temperature change trend of the charging apparatus is estimated based on the charging parameter.

Specifically, a structure of a terminal of the charging apparatus and another terminal of the charging apparatus paired with the terminal is shown in FIG. 2. A heating rate of a high-voltage terminal in the charging apparatus is $I^2R$, where I is a charging current, and R is a resistor connected to the terminal. The connected resistor includes a connected resistor at a cable crimping position (that is, a crimping position A4 and a crimping position B6 of a cable 1) and a connected resistor at a reed docking part 5 (that is, a docking part between a jack 2 and a pin 3). During the entire charging process, a heating rate and a heat dissipation rate of the charging apparatus terminal are expressed by the following formula:

$$\mathrm{Cm}\Delta\tau = I^2R - (\emptyset_1 + \emptyset_2 + \emptyset_3)$$

C is a specific heat capacity of the terminal, m is a mass of the terminal, $\Delta\tau$ is a temperature rise rate of the terminal, and $\emptyset_1$, $\emptyset_2$, and $\emptyset_3$ are a conductive heat dissipation rate, a convection heat dissipation rate, and a radiation heat dissipation rate respectively.

When charging starts, a difference between the temperature of the terminal and the ambient temperature is small. Therefore, the heat dissipation rate $(\emptyset_1 + \emptyset_2 + \emptyset_3)$ is less than the heating rate $(I^2R)$. It can be seen from the above formula that when the specific heat capacity C and the mass m are determined, when charging starts, the temperature rise rate $\Delta\tau$ reaches the highest value. As time goes by, the temperature of the terminal constantly rises, the heat dissipation rate gradually approaches the heating rate, and the temperature rise rate $\Delta\tau$ also constantly decreases. When the temperature of the terminal rises so that the heating rate and the heat dissipation rate are equal, the temperature rise rate is 0. Then, the temperature no longer rises and reaches a temperature equilibrium state.

It can be seen from the above analysis that in the time-temperature rise curve of the terminal during the charging process, an initial slope is a fixed value Z (Z>0), the slope constantly decreases with the increase of the charging time t, and at a time point T0, the slope Z is 0, and the temperature T of the terminal converges to a fixed value T0.

To obtain the temperature-time relationship of the charging apparatus during the charging process, the multiple charging parameters obtained by experimental testing may be marked in a coordinate system with the time t on the horizontal axis and the temperature T on the vertical axis, and then connected to obtain a corresponding temperature-time relationship curve, to estimate the temperature change trend of the charging apparatus. The temperature change trend of the charging apparatus may also be estimated by establishing a relationship formula between the temperature and the time. Since it is difficult to deduce the relationship formula by analyzing the structure of the charging apparatus, in this embodiment, the obtained charging parameters are used to fit the curve, that is, the obtained charging parameters (t, T) are substituted into a preset fitting function to obtain the corresponding temperature-time relationship through function construction, to obtain the time-temperature rise curve of the charging apparatus during the charging process, that is, the change relationship between the temperature and the time. The fitting function may be expressed by Taylor's formula, least squares fitting function formula, or the like. It can be understood that although the curve described by fitting is only an approximation of the original curve, as long as there are sufficient known points on the curve, the changing pattern of the original curve can be described accurately through fitting.

It should be noted that because the estimation is for the current charging process of the charging apparatus, an estimation termination time may be set to an end time of the charging process of the charging apparatus. The charging time of the charging apparatus may be estimated based on the charging power, or determined by querying a model of a device that applies the charging apparatus. The specific method will not be described herein.

The following is a detailed description of the method of estimating the temperature change trend of the charging apparatus during the charging process through function construction.

According to an embodiment of the present disclosure, fitting a change relationship between a temperature and a time of the charging socket during a vehicle charging process based on a temperature sampling moment and a temperature sampling value of each temperature sampling point includes: charging parameters of multiple sampling points and a fitting function are determined; the charging parameter of each sampling point is substituted into the fitting function to obtain various parameters in the fitting function; the obtained various parameters are substituted into the fitting function to obtain a temperature estimation model of the charging apparatus; and the temperature change trend of the charging apparatus is estimated based on the charging parameter and the temperature estimation model.

It should be noted that the number of sampling points should be greater than or equal to the number of parameters in the fitting function to facilitate the solution of unknown parameters in the fitting function.

According to an embodiment of the present disclosure, the fitting function is expressed by the following formula:

$$T = C_0 + C_1 t + C_2 t^2 + C_3 t^3 + ... + C_{n-1} t^{n-1}$$

$$(1)$$

$T$ represents a temperature of the charging socket, t represents a charging time, $C_0$ to $C_{n-1}$ represent the various parameters of the fitting function, and n is a number of the temperature sampling points.

Specifically, for example, a formula (1) is used as the representative formula of the fitting function, and the number of parameters of the formula is n. When charging starts, the temperature of the terminal is collected by a temperature sensor arranged on the terminal of the charging apparatus, and is recorded as a charging parameter (t0, T0) in combination with time, and the temperature is collected and recorded once in each sampling cycle, ultimately forming n sampling points (t0, T0), (t1, T1), ..., and (tn-1, Tn-1). Then, charging parameters of these n sampling points are substituted into the one-variable Taylor's formula (1) to solve parameters $C_0$ to $C_{n-1}$, and the solved $C_0$ to $C_{n-1}$ are substituted into formula (1). Then, a temperature estimation model of the charging apparatus is constructed, the constructed formula (1) may be used to estimate a temperature at a next sampling time, and by analogy, the estimation of the temperature change trend of the charging apparatus during the charging process is completed.

It should be noted that the above formula (1) is only a fitting function and can be replaced by other fitting functions to achieve the same effect. According to another embodiment of the present disclosure, the fitting function can be expressed by the following formula:

$$T(t) = A_0 + \sum_{j=1}^{n} B_j e^{-nt_i} + \sum_{j=1}^{n} C_j \arctan t_i$$

$$(2)$$

$T$ represents a temperature of the charging socket, t represents a charging time, $A_0$, $B_1$ to $B_n$, and $C_1$ to $C_n$ represent the various parameters of the fitting function, and n is a number of the temperature sampling points.

It can be understood that in addition to the above formula (1) and formula (2), the fitting function can also be expressed by other formulas according to the actual case, that is, the above two fitting functions can be replaced by other types of functions to achieve better fitting accuracy and estimation effect.

S3: When it is determined based on the temperature change trend that the highest estimated temperature is about to exceed a preset temperature threshold, the charging current is limited before the highest estimated temperature exceeds the preset temperature threshold. The preset temperature threshold of the charging apparatus can be pre-calibrated according to the actual application requirements of the charging apparatus. For example, the preset temperature threshold can be set to the maximum allowable temperature of the material of the charging port.

Specifically, after the fitting function is constructed, during the charging process, the temperature of the charging apparatus at all moments during the charging process can be calculated based on the fitting function, and the highest temperature during the charging process is used as the highest estimated temperature. The highest estimated temperature is then compared with the preset temperature threshold. For example, assuming that the temperature Tn of the charging socket at the estimation time tn is the highest estimated temperature during the entire charging process, the temperature Tn is compared with the preset temperature threshold. If Tn is greater than the preset temperature threshold, it means that the charging apparatus is subject to over-temperature during the charging process. In this case, the charging current is adjusted before the time tn is reached. That is, the charging current is reduced in advance before the temperature exceeds the preset temperature limit to reduce the temperature of the charging apparatus during the charging process, to avoid over-temperature. For example, the charging current may be adjusted at a current moment at which over-temperature is estimated, or the charging current may be adjusted at a preset time point before the tn time. The time interval between an adjustment time and tn can be set according to the actual case. If it is determined that the temperature Tn does not exceed the preset temperature threshold, it means that the charging apparatus is not subject to over-temperature during the entire charging process, and there is no need to limit the charging current, that is, the charging power. The entire charging operation is completed with this charging current. Therefore, this method uses a mathematical model to estimate the temperature and estimate in advance whether the charging apparatus is subject to over-temperature during the charging process. Compared with the existing temperature protection method, the method is safer and more reliable.

According to an embodiment of the present disclosure, the limiting the charging current before the highest estimated temperature exceeds the preset temperature threshold includes: the charging current is limited by gradually adjusting the charging current, so that the highest estimated temperature is within a preset temperature range. The preset temperature range can be set according to the actual case.

That is, when it is determined that the charging apparatus is subject to over-temperature during the charging process, the charging current is first adjusted slightly, and then the updated temperature change trend of the charging apparatus is obtained, and the highest estimated temperature during the charging process is reobtained based on the updated temperature change trend, and it is further determined whether the highest estimated temperature reobtained is within the preset temperature range. If the highest estimated temperature still does not meet the requirement of the preset temperature range, the charging current is adjusted again, and this cycle continues until it is determined that the updated highest estimated temperature does not exceed the preset temperature range, and then the charging current is no longer adjusted. This current is used as the charging current to complete the entire charging process. As a result, the charging current can be adjusted faster and more effectively. This ensures a larger charging current as much as possible while the charging apparatus is not subject to over-temperature.

According to an embodiment of the present disclosure, the limiting the charging current by gradually adjusting the charging current includes: an initial current during the charging process is determined; the initial current is reduced by a preset step, to obtain a first current; and when controlling the charging apparatus to charge the device with the first current, a charging parameter within a first preset time is obtained, the temperature change trend of the charging apparatus is estimated based on the charging parameter within the first preset time, the updated highest estimated temperature is obtained, and if the updated highest estimated temperature exceeds an upper limit of the preset temperature range, the first current continues to be reduced by a preset step, until the updated highest estimated temperature is less than the upper limit of the preset temperature range. The first preset time and the preset step can be set according to the actual case.

Specifically, it is assumed that the preset temperature range is [T', T"], the preset step is $\triangle I$, and the initial current during the charging process is I. When it is estimated that there is a highest estimated temperature greater than the preset temperature threshold during the charging process, $\triangle I$ is subtracted from the initial current I to obtain a first current I1, charging continues with the first current I1, temperature sampling is performed again through the temperature sensor to obtain n charging parameters within a first preset time, and n charging parameters reobtained are substituted into the above formula (1) or (2) to obtain a new temperature estimation model of the charging apparatus. Then, the temperature change trend of the charging apparatus is estimated again by obtaining the charging parameters and the temperature estimation model again, to obtain the updated highest estimated temperature T1, the temperature T1 is compared with the upper limit value T" of the preset temperature range, if T1 is greater than T", I1 continues to be reduced by $\triangle I$, and the above operations are repeated until the updated highest estimated temperature T1 is less than or equal to the upper limit T".

When the updated highest estimated temperature does not exceed the upper limit of the preset temperature range, the highest estimated temperature is compared with the lower limit of the preset temperature range. According to an embodiment of the present disclosure, the limiting the charging current by gradually adjusting the charging current further includes: when controlling the charging apparatus to charge the device with the first current, a relationship between the updated highest estimated temperature and a lower limit of the preset temperature range is determined; and if the updated highest estimated temperature is less than the lower limit of the preset temperature range, a second current is determined based on the initial current and the first current, the charging apparatus is controlled to charge the device with the second current, a charging parameter within a second preset time is obtained, the temperature change trend of the charging apparatus is estimated based on the charging parameter within the second preset time, the updated highest estimated temperature is obtained, and if the updated highest estimated temperature is still less than the lower limit of the preset temperature range, a value of the second current is assigned to the first current until the updated highest estimated temperature is greater than or equal to the lower limit of the preset temperature range, where the second current is greater than the first current and less than the initial current. The second preset time can be set according to the actual application.

According to an embodiment of the present disclosure, the determining a second current according to the initial current and the first current includes: the initial current and the first current are added and the added result is halved to obtain the second current.

Specifically, the example of the preset temperature range [T', T"], the initial current I during the charging process, and the first current I1 is still used. The temperature T1 that is less than or equal to T" is compared with the lower limit T' of the preset temperature range, if T1 is less than T', the second current I2 is calculated through the formula (I+I1)/2=I2, the current I2 is used as the charging current to perform the charging operation, charging parameters are obtained within a second preset time, and a new temperature estimation model is obtained through the above method. According to the charging parameters and the temperature estimation model reobtained with I2 as the charging current, a new highest estimated temperature is obtained and recorded as a temperature T2. The temperature T2 is compared with the lower limit T', if the temperature T2 is still less than T', I1=I2, that is, a value of I2 is assigned to I1, the reassigned I1 is substituted into the formula (I+I1)/2=I2 to obtain the new second current I2 again as the charging current for the charging operation, and the above operations are repeated to obtain the estimation model and the corresponding updated highest estimated temperature T2 again, and so on, until the highest estimated temperature T2 of the charging apparatus is greater than or equal to the lower limit T'.

Further, according to an embodiment of the present disclosure, the limiting the charging current by gradually adjusting the charging current further includes: when controlling the charging apparatus to charge the device with the second current, if the updated highest estimated temperature is greater than the upper limit of the preset temperature range, the value of the second current is assigned to the initial current until the updated highest estimated temperature is less than or equal to the upper limit of the preset temperature range.

That is, if the highest estimated temperature T2 obtained through estimation during charging with the second current I2 is greater than the upper limit T", a value of I2 is assigned to the initial current I, that is, I=I2, and the reassigned I is substituted into the formula (I+I1)/2=I2, to obtain the new second current I2 again, and then the above operations are repeated to obtain a new highest estimated temperature T2 until T2 is less than or equal to the upper limit T".

In this embodiment, after estimating the temperature rise of the charging apparatus through the above fitting function, a preset step is first used to adjust the charging current slightly, the temperature change trend of the charging apparatus at this time is detected and a new estimated highest temperature is obtained, and then the relationship between the estimated highest temperature reobtained and the preset temperature range is determined. When the estimated highest temperature reobtained is greater than the preset temperature range, the current is further adjusted by the preset step. If the estimated highest temperature reobtained is less than the preset temperature range, the charging current is re-adjusted to the intermediate value before and after the change, and the estimated highest temperature is reobtained. In this way, the current average is obtained through continuous cycles until the updated estimated highest temperature changes within the allowable range (that is, the preset temperature range), and the adjustment of the charging current is stopped and the charging current is considered to reach the optimal value. This method enables the charging process to automatically reach the maximum allowable charging current while the charging apparatus is not subject to over-temperature, avoiding previous difficulty in setting the temperature threshold.

It should be noted that in addition to the above formula (I+I1)/2=I2, the method for obtaining the second current can also be set according to the actual case.

According to an embodiment of the present disclosure, the limiting the charging current by gradually adjusting the charging current further includes: when controlling the charging apparatus to charge the device with the second current, if the updated highest estimated temperature is within the preset temperature range, the current charging current is maintained.

That is, if the charging current is the second current I2, the current temperature T2 satisfies: T'≤T1≤T", then the adjustment of the charging current is stopped, and the charging operation is continued with the second current I2 as the charging current until the charging is completed.

According to an embodiment of the present disclosure, the limiting the charging current by gradually adjusting the charging current further includes: when controlling the charging apparatus to charge the device with the first current, if the updated highest estimated temperature is within the preset temperature range, the current charging current is maintained.

That is, if the highest estimated temperature T1 estimated during the charging process with the first current I1 satisfies: T'≤T1≤T", the current adjustment is stopped and charging is continued with the first current I1 until the charging is completed.

It is understandable that during the charging process, the adjustment of the charging current is also controlled by the battery, the motor, electronic control and other components in the device. Therefore, when controlling the charging current, the above method of over-temperature protection for a charging apparatus needs to be combined with limitations of other products of the device in comprehensive conditions, to meet the temperature limit requirements of the products.

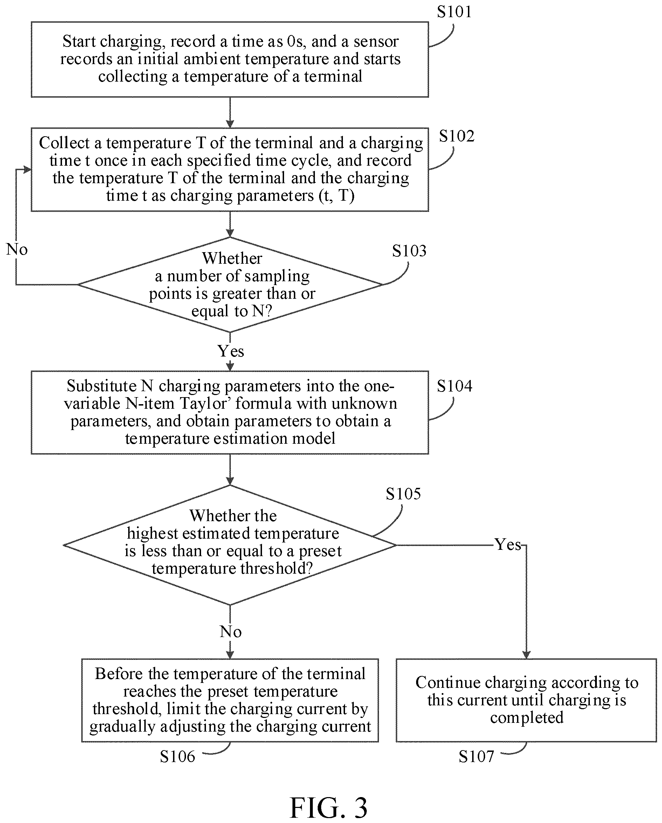

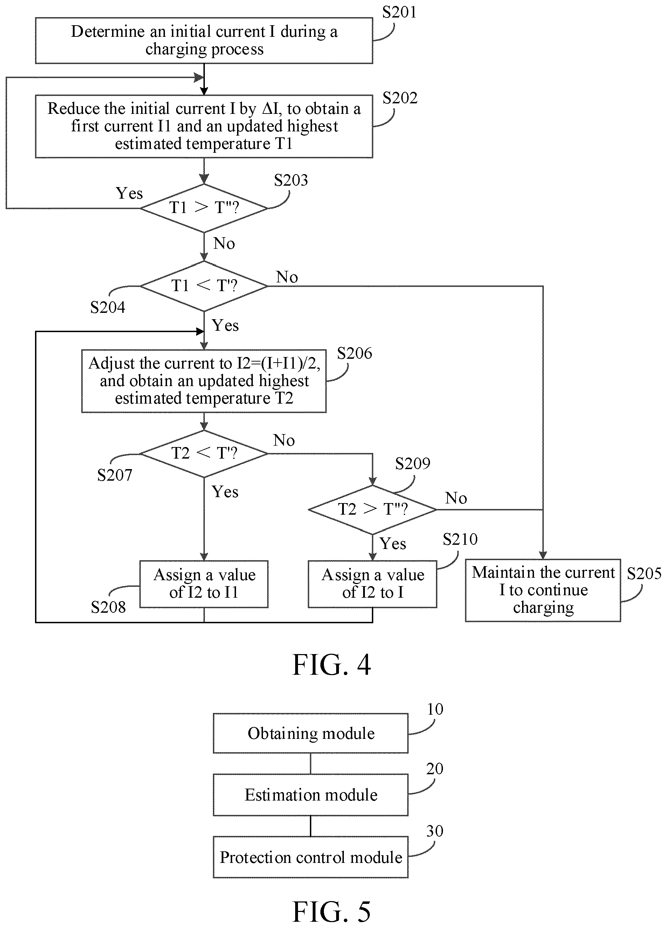

As a specific embodiment of the present disclosure, a temperature sensor is installed at the terminal of the charging apparatus, and collects the real-time temperature of the terminal as the temperature of the charging apparatus. As shown in FIG. 3 and FIG. 4, the method of over-temperature protection for a charging apparatus includes the following steps. A preset number of samples is N, the formula of the fitting function is the one-variable N-term Taylor's formula with unknown parameters, that is, the number of parameters in the formula is N, and the preset temperature threshold of the charging apparatus is the maximum allowable temperature of the material of the charging port.

S101: Charging is started, a time is recorded as 0s, and a sensor records an initial ambient temperature and starts collecting a temperature of a terminal.

S102: A temperature T of the terminal and a charging time t are collected once in each specified sampling time, and are recorded as charging parameters (t, T).

S103: It is determined whether a number of sampling points is greater than or equal to N. If yes, step S104 is performed. If not, step S102 is performed.

S104: N charging parameters are substituted into the one-variable N-item Taylor' formula with unknown parameters, and parameters are obtained to obtain a temperature estimation model of the charging apparatus.

S105: It is determined whether the highest estimated temperature determined by estimating the temperature change trend based on the charging parameters and the temperature estimation model is greater than a preset temperature threshold. If yes, step S106 is performed. If not, step S107 is performed.

S106: Before the temperature of the terminal reaches the preset temperature threshold, the charging current is limited by gradually adjusting the charging current.

S107: Charging is continued according to this current until charging is completed.

The specific operation steps of the above step S106 are shown in FIG. 4, including the following steps. The preset temperature range is [T', T"], and the preset step is △I.

S201: An initial current I during a charging process is determined.

S202: The initial current I is reduced by △I, to obtain a first current I1 and an updated highest estimated temperature T1.

S203: It is determined whether T1 is greater than T". If yes, step S202 is performed. If not, step S204 is performed.

S204: It is determined whether T1 is less than T'. If yes, step S206 is performed. If not, step S205 is performed.

S205: The current charging current is maintained until charging is completed.

S206: The charging current is adjusted to a second current I2=(I+I1)/2, and an updated highest estimated temperature T2 is obtained.

S207: It is determined whether T2 is less than T'. If yes, step S208 is performed. If not, step S209 is performed.

S208: A value of I2 is assigned to I1, and step S206 is performed.

S209: It is determined whether T2 is greater than T". If yes, step S210 is performed. If not, step S205 is performed.

S210: A value of I2 is assigned to I, and step S206 is performed.

In conclusion, according to the method of over-temperature protection for a charging apparatus according to the embodiments of the present disclosure, first, a charging parameter of a charging apparatus during a charging process is obtained, where the charging parameter includes a time and a temperature, and the time corresponds to the temperature, a temperature change trend of the charging apparatus is estimated based on the charging parameter, and finally, when it is determined based on the temperature change trend that the highest estimated temperature is about to exceed a preset temperature threshold, the charging current is limited before the highest estimated temperature exceeds the preset temperature threshold. Therefore, in this method, a temperature change trend of a charging apparatus is estimated based on a charging parameter, and it can be estimated in advance whether the charging apparatus is subj ect to over-temperature during a charging process, so that the charging current can be adjusted faster and more effectively, and safety and reliability are improved.

Corresponding to the foregoing embodiments, the present disclosure further proposes an apparatus of over-temperature protection for a charging apparatus.

As shown in FIG. 5, the apparatus of over-temperature protection for a charging apparatus according to this embodiment of the present disclosure may include: an obtaining module 10, an estimation module 20 and a protection control module 30.

The obtaining module 10 is configured to obtain a charging parameter of a charging apparatus during a charging process, where the charging parameter includes a time and a temperature, and the time corresponds to the temperature.

The estimation module 20 is configured to estimate a temperature change trend of the charging apparatus based on the charging parameter. The protection control module 30 is configured to: when determining based on the temperature change trend that the highest estimated temperature is about to exceed a preset temperature threshold, limit the charging current before the highest estimated temperature exceeds the preset temperature threshold.

According to an embodiment of the present disclosure, when estimating the temperature change trend of the charging apparatus according to the charging parameter, the estimation module 20 is specifically configured to: determine charging parameters of multiple sampling points and a fitting function; substitute the charging parameter of each sampling point into the fitting function to obtain various parameters in the fitting function; substitute the obtained various parameters into the fitting function to obtain a temperature estimation model of the charging apparatus; and estimate the temperature change trend of the charging apparatus based on the charging parameter and the temperature estimation model.

According to an embodiment of the present disclosure, the fitting function in the estimation module 20 is expressed by the following formula:

$$T = C_0 + C_1 t + C_2 t^2 + C_3 t^3 + ... + C_{n-1} t^{n-1}$$

where $T$ represents a temperature of the charging apparatus, t represents a charging time, $C_0$ to $C_{n-1}$ represent the various parameters of the fitting function, and n is a number of the temperature sampling points.

According to another embodiment of the present disclosure, the fitting function in the estimation module 20 is expressed by the following formula:

$$T(t) = A_0 + \sum_{j=1}^{n} B_j e^{-nt_i} + \sum_{j=1}^{n} C_j \arctan t_i$$

where $T$ represents a temperature of the charging apparatus, t represents a charging time, $A_0$, $B_1$ to $B_n$, and $C_1$ to $C_n$ represent the various parameters of the fitting function, and n is a number of the temperature sampling points.

According to an embodiment of the present disclosure, when limiting the charging current before the highest estimated temperature exceeds the preset temperature threshold, the protection control module 30 is specifically configured to: limit the charging current by gradually adjusting the charging current, and the highest estimated temperature is within a preset temperature range.

According to an embodiment of the present disclosure, when limiting the charging current by gradually adjusting the charging current, the protection control module 30 is specifically configured to: determine an initial current during the charging process; reduce the initial current by a preset step, to obtain a first current; and when controlling the charging apparatus to charge the device with the first current, obtain a charging parameter within a first preset time, estimate the temperature change trend of the charging apparatus based on the charging parameter within the first preset time, obtain the updated highest estimated temperature, and if the updated highest estimated temperature exceeds an upper limit of the preset temperature range, continue to reduce the first current by a preset step, until the updated highest estimated temperature does not exceed the upper limit of the preset temperature range.

According to an embodiment of the present disclosure, when limiting the charging current by gradually adjusting the charging current, the protection control module 30 is specifically configured to: when controlling the charging apparatus to charge the device with the first current, if the updated highest estimated temperature does not exceed the upper limit of the preset temperature range, determine a relationship between the updated highest estimated temperature and a lower limit of the preset temperature range; and if the updated highest estimated temperature is less than the lower limit of the preset temperature range, determine a second current based on the initial current and the first current, control the charging apparatus to charge the device with the second current, obtain a charging parameter within a second preset time, estimate the temperature change trend of the charging apparatus based on the charging parameter within the second preset time, obtain the updated highest estimated temperature, and if the updated highest estimated temperature is still less than the lower limit of the preset temperature range, assign a value of the second current to the first current until the updated highest estimated temperature is greater than or equal to the lower limit of the preset temperature range, where the second current is greater than the first current and less than the initial current.

According to an embodiment of the present disclosure, when limiting the charging current by gradually adjusting the charging current, the protection control module 30 is specifically configured to: when controlling the charging apparatus to charge the device with the second current, if the updated highest estimated temperature is greater than the upper limit of the preset temperature range, assign the value of the second current to the initial current until the updated highest estimated temperature is less than or equal to the upper limit of the preset temperature range.

According to an embodiment of the present disclosure, when determining the second current according to the initial current and the first current, the protection control module 30 is specifically configured to: add the initial current and the first current and halve the added result to obtain the second current.

According to an embodiment of the present disclosure, when limiting the charging current by gradually adjusting the charging current, the protection control module 30 is specifically configured to: when controlling the charging apparatus to charge the device with the second current, if the updated highest estimated temperature is within the preset temperature range, maintain the current charging current.

According to an embodiment of the present disclosure, when limiting the charging current by gradually adjusting the charging current, the protection control module 30 is specifically configured to: when controlling the charging apparatus to charge the device with the first current, if the updated highest estimated temperature is within the preset temperature range, maintain the current charging current.

It should be noted that for the details not disclosed in the apparatus of over-temperature protection for a charging apparatus in the embodiments of the present disclosure, refer to the details disclosed in the method of over-temperature protection for a charging apparatus in the above embodiments of the present disclosure, which will not be detailed here.

In conclusion, according to the apparatus of over-temperature protection for a charging apparatus according to the embodiments of the present disclosure, the obtaining module obtains a charging parameter of a charging apparatus during a charging process, the estimation module estimates a temperature change trend of the charging apparatus based on the charging parameter, and when it is determined based on the temperature change trend that the highest estimated temperature is about to exceed a preset temperature threshold, the protection control module limits the charging current before the highest estimated temperature exceeds the preset temperature threshold. Therefore, in this apparatus, a temperature change trend of a charging apparatus is estimated based on a charging parameter, and it can be estimated in advance whether the charging apparatus is subject to over-temperature during a charging process, so that the charging current can be adjusted faster and more effectively, and safety and reliability are improved.

Corresponding to the foregoing embodiments, the present disclosure further proposes an electric vehicle.

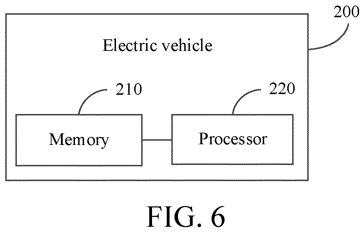

As shown in FIG. 6, the electric vehicle 200 according to the embodiment of the present disclosure may include: a memory 210, a processor 220, and an over-temperature protection program for a charging apparatus stored in the memory 210 and executable on the processor 220, when the over-temperature protection program is executed by the processor 220, the foregoing method of over-temperature protection for a charging apparatus being implemented.

According to the electric vehicle according to the embodiments of the present disclosure, based on the foregoing method of over-temperature protection for a charging apparatus, a temperature change trend of a charging apparatus is estimated based on a charging parameter, and it can be estimated in advance whether the charging apparatus is subject to over-temperature during a charging process, so that the charging current can be adjusted faster and more effectively, and safety and reliability are improved.

Corresponding to the foregoing embodiments, the present disclosure further proposes a computer-readable storage medium.

The computer-readable storage medium according to this embodiment of the present disclosure stores an over-temperature protection program for a charging apparatus, when the over-temperature protection program for a charging apparatus is executed by a processor, the foregoing method of over-temperature protection for a charging apparatus being implemented.

According to the computer-readable storage medium of the embodiments of the present disclosure, based on the foregoing method of over-temperature protection for a charging apparatus, a temperature change trend of a charging apparatus is estimated based on a charging parameter, and it can be estimated in advance whether the charging apparatus is subject to over-temperature during a charging process, so that the charging current can be adjusted faster and more effectively, and safety and reliability are improved.

It should be noted that the logic and/or steps shown in the flowcharts or described in any other manner herein, for example, a sequenced list that may be considered as executable instructions used for implementing logical functions, may be specifically implemented in any computer-readable medium to be used by an instruction execution system, apparatus, or device (for example, a computer-based system, a system including a processor, or another system that can obtain an instruction from the instruction execution system, apparatus, or device and execute the instruction) or to be used by combining such instruction execution systems, apparatuses, or devices. In the context of this specification, a "computer-readable medium" may be any apparatus that can include, store, communicate, propagate, or transmit the program for use by the instruction execution system, apparatus, or device or in combination with the instruction execution system, apparatus, or device. More specific examples (non-exhaustive list) of the computer-readable medium include the following: an electrical connection (electronic apparatus) having one or more wires, a portable computer diskette (magnetic apparatus), a random access memory (RAM), a read-only memory (ROM), an erasable programmable read-only memory (EPROM or flash memory), an optical fiber apparatus, and a portable compact disk read-only memory (CDROM). In addition, the computer-readable medium can even be paper or other suitable media on which the program can be printed, because the program can be obtained electronically by, for example, optically scanning paper or other media, then editing, interpreting, or processing in other suitable ways if necessary, and then storing it in a computer memory.

It should be understood that, parts of the present disclosure can be implemented by using hardware, software, firmware, or a combination thereof. In the foregoing implementations, multiple steps or methods may be implemented by using software or firmware that are stored in a memory and are executed by a proper instruction execution system. For example, if hardware is used for implementation, same as in another implementation, implementation may be performed by any one of the following technologies well known in the art or a combination thereof: a discrete logic circuit including a logic gate circuit for implementing a logic function of a data signal, a dedicated integrated circuit including a proper combined logic gate circuit, a programmable gate array (PGA), a field programmable gate array (FPGA), and the like.

In the description of this specification, the description of the reference terms "an embodiment", "some embodiments", "an example", "a specific example", "some examples," and the like means that specific features, structures, materials or characteristics described in combination with the embodiment(s) or example(s) are included in at least one embodiment or example of the present disclosure. In this specification, exemplary descriptions of the foregoing terms do not necessarily refer to the same embodiment or example. In addition, the described specific features, structures, materials, or characteristics may be combined in a proper manner in any one or more of the embodiments or examples.

In addition, terms "first" and "second" are used merely for the purpose of description, and shall not be construed as indicating or implying relative importance or implying a quantity of indicated technical features. Therefore, a feature restricted by "first" or "second" may explicitly indicate or implicitly include at least one of such features. In the descriptions of the present disclosure, unless explicitly specified, "multiple" means at least two, for example, two or three.

Although the embodiments of the present disclosure have been shown and described above, it can be understood that, the foregoing embodiments are exemplary and should not be understood as limitation to the present disclosure. A person of ordinary skill in the art can make changes, modifications, replacements, or variations to the foregoing embodiments within the scope of the present disclosure.

**Claims**

1. A method of over-temperature protection for a charging apparatus, comprising:

   obtaining a charging parameter of a charging apparatus during a charging process, wherein the charging parameter comprises a time and a temperature, and the time corresponds to the temperature;
   estimating a temperature change trend of the charging apparatus based on the charging parameter; and
   when determining based on the temperature change trend that the highest estimated temperature is about to exceed a preset temperature threshold, limiting the charging current before the highest estimated temperature exceeds the preset temperature threshold.

2. The method of over-temperature protection for a charging apparatus according to claim 1, wherein the estimating a temperature change trend of the charging apparatus based on the charging parameter comprises:

   determining charging parameters of a plurality of sampling points and a fitting function;
   substituting the charging parameter of each sampling point into the fitting function to obtain various parameters in the fitting function;
   substituting the obtained various parameters into the fitting function to obtain a temperature estimation model of the charging apparatus; and
   estimating the temperature change trend of the charging apparatus based on the charging parameter and the temperature estimation model.

3. The method of over-temperature protection for a charging apparatus according to claim 2, wherein the fitting function is expressed by the following formula:

$$T = C_0 + C_1 t + C_2 t^2 + C_3 t^3 + \ldots + C_{n-1} t^{n-1}$$

   wherein $T$ represents a temperature of the charging apparatus, t represents a charging time, $C_0$ to $C_{n-1}$ represent the various parameters of the fitting function, and n is a number of the temperature sampling points.

4. The method of over-temperature protection for a charging apparatus according to claim 2 or 3, wherein the fitting function is expressed by the following formula:

$$T(t) = A_0 + \sum_{j=1}^{n} B_j e^{-nt_i} + \sum_{j=1}^{n} C_j \arctan t_i$$

wherein $T$ represents a temperature of the charging apparatus, t represents a charging time, $A_0$, $B_1$ to $B_n$, and $C_1$ to $C_n$ represent the various parameters of the fitting function, and n is a number of the temperature sampling points.

5. The method of over-temperature protection for a charging apparatus according to claim 1 to 4, wherein the limiting the charging current before the highest estimated temperature exceeds the preset temperature threshold comprises: limiting the charging current by gradually adjusting the charging current, and the highest estimated temperature is within a preset temperature range.

6. The method of over-temperature protection for a charging apparatus according to claim 5, wherein the limiting the charging current by gradually adjusting the charging current comprises:

   determining an initial current during the charging process;
   reducing the initial current by a preset step, to obtain a first current; and
   when controlling the charging apparatus to charge the device with the first current, obtaining a charging parameter within a first preset time, estimating the temperature change trend of the charging apparatus based on the charging parameter within the first preset time, obtaining the updated highest estimated temperature, and if the updated highest estimated temperature exceeds an upper limit of the preset temperature range, continuing to reduce the first current by a preset step, until the updated highest estimated temperature does not exceed the upper limit of the preset temperature range.

7. The method of over-temperature protection for a charging apparatus according to claim 6, wherein the limiting the charging current by gradually adjusting the charging current further comprises:

   when controlling the charging apparatus to charge the device with the first current, if the updated highest estimated temperature does not exceed the upper limit of the preset temperature range, determining a relationship between the updated highest estimated temperature and a lower limit of the preset temperature range; and if the updated highest estimated temperature is less than the lower limit of the preset temperature range, determining a second current based on the initial current and the first current, controlling the charging apparatus to charge the device with the second current, obtaining a charging parameter within a second preset time, estimating the temperature change trend of the charging apparatus based on the charging parameter within the second preset time, obtaining the updated highest estimated temperature, and if the updated highest estimated temperature is still less than the lower limit of the preset temperature range, assigning a value of the second current to the first current until the updated highest estimated temperature is greater than or equal to the lower limit of the preset temperature range, wherein the second current is greater than the first current and less than the initial current.

8. The method of over-temperature protection for a charging apparatus according to claim 7, wherein the limiting the charging current by gradually adjusting the charging current further comprises: when controlling the charging apparatus to charge the device with the second current, if the updated highest estimated temperature is greater than the upper limit of the preset temperature range, assigning the value of the second current to the initial current until the updated highest estimated temperature is less than or equal to the upper limit of the preset temperature range.

9. The method of over-temperature protection for a charging apparatus according to claim 7 or 8, wherein the determining a second current according to the initial current and the first current comprises: adding the initial current and the first current and halving the added result to obtain the second current.

10. The method of over-temperature protection for a charging apparatus according to claim 7 to 9, wherein the limiting the charging current by gradually adjusting the charging current further comprises: when controlling the charging apparatus to charge the device with the second current, if the updated highest estimated temperature is within the preset temperature range, maintaining the current charging current.

11. The method of over-temperature protection for a charging apparatus according to claim 6 to 10, wherein the limiting the charging current by gradually adjusting the charging current further comprises:

when controlling the charging apparatus to charge the device with the first current, if the updated highest estimated temperature is within the preset temperature range, maintaining the current charging current.

12. An apparatus of over-temperature protection for a charging apparatus, comprising:

an obtaining module, configured to obtain a charging parameter of a charging apparatus during a charging process, wherein the charging parameter comprises a time and a temperature, and the time corresponds to the temperature;
an estimation module, configured to estimate a temperature change trend of the charging apparatus based on the charging parameter; and
a protection control module, configured to: when determining based on the temperature change trend that the highest estimated temperature is about to exceed a preset temperature threshold, limit the charging current before the highest estimated temperature exceeds the preset temperature threshold.

13. An electric vehicle, comprising: a memory, a processor, and a program of over-temperature protection for a charging apparatus and stored in the memory which, when executed by the processor, causes the processor to implement the method of over-temperature protection for the charging apparatus according to any one of claims 1 to 11.

14. A computer-readable storage medium, storing a program of over-temperature protection for a charging apparatus which, when executed by a processor, causes the processor to implement the method of over-temperature protection for the charging apparatus according to any one of claims 1 to 11 being implemented.

Obtain a charging parameter of a charging apparatus during a charging process, where the charging parameter includes a time and a temperature, and the time corresponds to the temperature

S1

Estimate a temperature change trend of the charging apparatus based on the charging parameter

S2

When it is determined based on the temperature change trend that the highest estimated temperature is about to exceed a preset temperature threshold, limit the charging current before the highest estimated temperature exceeds the preset temperature threshold

S3

FIG. 1

FIG. 2

S101

Start charging, record a time as 0s, and a sensor records an initial ambient temperature and starts collecting a temperature of a terminal

S102

Collect a temperature T of the terminal and a charging time t once in each specified time cycle, and record the temperature T of the terminal and the charging time t as charging parameters (t, T)

No

Whether a number of sampling points is greater than or equal to N?    S103

Yes

Substitute N charging parameters into the one-variable N-item Taylor' formula with unknown parameters, and obtain parameters to obtain a temperature estimation model    S104

Whether the highest estimated temperature is less than or equal to a preset temperature threshold?    S105    Yes

No

Before the temperature of the terminal reaches the preset temperature threshold, limit the charging current by gradually adjusting the charging current

S106

Continue charging according to this current until charging is completed

S107

FIG. 3

Determine an initial current I during a charging process $\quad$ S201

Reduce the initial current I by ΔI, to obtain a first current I1 and an updated highest estimated temperature T1 $\quad$ S202

Yes $\quad$ S203
T1 > T''?

No

T1 < T'? $\quad$ No
S204

Yes

Adjust the current to I2=(I+I1)/2, and obtain an updated highest estimated temperature T2 $\quad$ S206

T2 < T'? $\quad$ No
S207

Yes

T2 > T''? $\quad$ No
S209

Yes $\quad$ S210

Assign a value of I2 to I1 $\quad$ S208

Assign a value of I2 to I

Maintain the current I to continue charging $\quad$ S205

## FIG. 4

Obtaining module $\quad$ 10

Estimation module $\quad$ 20

Protection control module $\quad$ 30

## FIG. 5

FIG. 6

## INTERNATIONAL SEARCH REPORT

| International application No. |
|---|
| **PCT/CN2022/141823** |

**A.      CLASSIFICATION OF SUBJECT MATTER**

B60L58/10(2019.01)i;B60L58/25(2019.01)i;B60L53/62(2019.01)i

According to International Patent Classification (IPC) or to both national classification and IPC

**B.      FIELDS SEARCHED**

Minimum documentation searched (classification system followed by classification symbols)

IPC: B60L, H02J

Documentation searched other than minimum documentation to the extent that such documents are included in the fields searched

Electronic data base consulted during the international search (name of data base and, where practicable, search terms used)

CNTXT, CNKI, WPABS, DWPI: 车辆, 充电, 电池, 温度, 过温, 保护, 时间, 预估, 预测, 估计, 电流; vehicle, charg+, battery, temperature, protect+, time, estimat+, current

**C.      DOCUMENTS CONSIDERED TO BE RELEVANT**

| Category* | Citation of document, with indication, where appropriate, of the relevant passages | Relevant to claim No. |
|---|---|---|
| X | CN 113815494 A (LYNKVERTX TECHNOLOGY CO., LTD.) 21 December 2021 (2021-12-21)<br>      description, paragraphs 0063-0133, and figures 1-9 | 1, 5, 6, 11-14 |
| Y | CN 113815494 A (LYNKVERTX TECHNOLOGY CO., LTD.) 21 December 2021 (2021-12-21)<br>      description, paragraphs 0063-0133, and figures 1-9 | 2-4 |
| Y | CN 109466372 A (SHANGHAI YUANCHENG AUTOMOBILE TECHNOLOGY CO., LTD.) 15 March 2019 (2019-03-15)<br>      description, embodiment 1, and figures 1 and 2 | 2-4 |
| A | CN 104424396 A (GM GLOBAL TECHNOLOGY OPERATIONS LLC.) 18 March 2015 (2015-03-18)<br>      entire document | 1-14 |
| A | KR 20190042314 A (HYUNDAI MOTOR CO., LTD. et al.) 24 April 2019 (2019-04-24)<br>      entire document | 1-14 |
| A | US 2021231739 A1 (Hong, Jing et al.) 29 July 2021 (2021-07-29)<br>      entire document | 1-14 |

☑ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **01 March 2023** | **13 March 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**EP 4 393 767 A1**

**INTERNATIONAL SEARCH REPORT**

International application No.

**PCT/CN2022/141823**

**C.      DOCUMENTS CONSIDERED TO BE RELEVANT**

| Category* | Citation of document, with indication, where appropriate, of the relevant passages | Relevant to claim No. |
|---|---|---|
| A | CN 113352896 A (NINGBO JUNSHENG NEW ENERGY RESEARCH INSTITUTE CO., LTD.) 07 September 2021 (2021-09-07)<br>entire document | 1-14 |

Form PCT/ISA/210 (second sheet) (July 2022)

20

INTERNATIONAL SEARCH REPORT
Information on patent family members

International application No.

**PCT/CN2022/141823**

| Patent document cited in search report | | | Publication date (day/month/year) | Patent family member(s) | | | Publication date (day/month/year) |
|---|---|---|---|---|---|---|---|
| CN | 113815494 | A | 21 December 2021 | None | | | |
| CN | 109466372 | A | 15 March 2019 | None | | | |
| CN | 104424396 | A | 18 March 2015 | US | 2015066837 | A1 | 05 March 2015 |
| | | | | DE | 102014112349 | A1 | 05 March 2015 |
| KR | 20190042314 | A | 24 April 2019 | US | 2019111796 | A1 | 18 April 2019 |
| | | | | EP | 3470254 | A1 | 17 April 2019 |
| US | 2021231739 | A1 | 29 July 2021 | WO | 2021154827 | A1 | 05 August 2021 |
| | | | | EP | 4096962 | A1 | 07 December 2022 |
| | | | | US | 2022326307 | A1 | 13 October 2022 |
| CN | 113352896 | A | 07 September 2021 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111649681